(19) Europäisches Patentamt
European Patent Office
Office européen des brevets

(11) EP 1 259 854 B1

(12) **FASCICULE DE BREVET EUROPEEN**

(45) Date de publication et mention de la délivrance du brevet:
**14.02.2007 Bulletin 2007/07**

(21) Numéro de dépôt: **01270801.2**

(22) Date de dépôt: **11.12.2001**

(51) Int Cl.:
***G02F 1/1337*** *(2006.01)* ***G02F 1/139*** *(2006.01)*

(86) Numéro de dépôt international:
**PCT/FR2001/003921**

(87) Numéro de publication internationale:
**WO 2002/048782 (20.06.2002 Gazette 2002/25)**

(54) **PROCEDE DE REALISATION D'UN DISPOSITIF A CRISTAUX LIQUIDES PERFECTIONNE, ET DISPOSITIF AINSI OBTENU**

VERFAHREN ZUR HERSTELLUNG EINES VERBESSERTEN FLÜSSIGKRISTALLBAUELEMENTS UND RESULTIERENDES BAUELEMENT

METHOD FOR PRODUCING AN IMPROVED LIQUID CRYSTAL DEVICE, AND RESULTING DEVICE

(84) Etats contractants désignés:
**AT BE CH CY DE DK ES FI FR GB GR IE IT LI LU MC NL PT SE TR**

(30) Priorité: **12.12.2000 FR 0016135**

(43) Date de publication de la demande:
**27.11.2002 Bulletin 2002/48**

(73) Titulaire: **Nemoptic**
**78114 Magny-Les-Hameaux (FR)**

(72) Inventeurs:
- **LAMARQUE-FORGET, Sandrine**
  **F-78114 Magny les Hameaux (FR)**
- **ROUX, Julien**
  **07530 Saint Joseph Des Bancs (FR)**
- **DOZOV, Ivan, N.**
  **F-91190 Gif-Sur-Yvette (FR)**
- **MARTINOT-LAGARDE, Philippe, R.**
  **F-91460 Marcoussis (FR)**

(74) Mandataire: **Texier, Christian et al**
**Cabinet Régimbeau**
**20, rue de Chazelles**
**75847 Paris cedex 17 (FR)**

(56) Documents cités:
**EP-A- 0 351 718**

- **VORFLUSEV V P ET AL: "Azimuthal anchoring of liquid crystals at the surface of photo-induced anisotropic films" APPLIED PHYSICS A (MATERIALS SCIENCE PROCESSING), JUNE 1997, SPRINGER-VERLAG, GERMANY, vol. A64, no. 6, pages 615-618, XP002195129 ISSN: 0947-8396**
- **BARBERI R ET AL: "Bistable nematic azimuthal alignment induced by anchoring competition" JOURNAL OF APPLIED PHYSICS, 1 AUG. 1998, AIP, USA, vol. 84, no. 3, pages 1321-1324, XP002175259 ISSN: 0021-8979**
- **THOMAS E A ET AL: "Quantitative uses of the X-ray photoelectron spectroscopy valence band region in the analysis of polymer blends" 44TH NATIONAL SYMPOSIUM OF THE AMERICAN VACUUM SOCIETY, SAN JOSE, CA, USA, 20-24 OCT. 1997, vol. 16, no. 3, pages 1106-1111, XP002175260 Journal of Vacuum Science & Technology A (Vacuum, Surfaces, and Films), May-June 1998, AIP for American Vacuum Soc, USA ISSN: 0734-2101**
- **BARBERI R ET AL: "AZIMUTHAL ANCHORING OF NEMATIC ON UNDULATED SUBSTRATE: ELASTICITY VERSUS MEMORY" EUROPEAN PHYSICAL JOURNAL B. CONDENSED MATTER, EDP SCIENCES;SPRINGER VERLAG, LES ULIS,, FR, vol. 6, no. 1, 1998, pages 83-91, XP001010731 ISSN: 1434-6028**
- **RAMDANE O OU ET AL: "Memory-free conic anchoring of liquid crystals on a solid substrate" PHYSICAL REVIEW LETTERS, 24 APRIL 2000, APS, USA, vol. 84, no. 17, pages 3871-3874, XP002195039 ISSN: 0031-9007**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

- DREYFUS-LAMBEZ H ET AL: "STRENGTH OF MEMORY-INDUCED ANCHORING OF 5CB ON BARE UNTREATED ITO" MOLECULAR CRYSTALS AND LIQUID CRYSTALS, GORDON AND BREACH, LONDON, GB, vol. 352, 2000, pages 19-26, XP001010815 ISSN: 0026-8941
- KIM H-T ET AL: "SYNTHESIS, PHOTO-REACTION AND PHOTO-INDUCED LIQUID CRYSTAL ALIGNMENT OF SOLUBLE POLYIMIDE WITH PENDANT CINNAMATE GROUP" LIQUID CRYSTALS, TAYLOR AND FRANCIS LTD, LONDON, GB, vol. 27, no. 10, octobre 2000 (2000-10), pages 1343-1356, XP001065717 ISSN: 0267-8292
- BRYAN-BROWN G P ET AL: "WEAK SURFACE ANCHORING OF LIQUID CRYSTALS" NATURE, MACMILLAN JOURNALS LTD. LONDON, GB, vol. 399, mai 1999 (1999-05), pages 338-340, XP000892183 ISSN: 0028-0836

## Description

La présente invention concerne le domaine des dispositifs d'affichage à cristaux liquides.

Plus précisément, la présente invention a pour objectif principal de proposer de nouveaux moyens d'ancrage des molécules de cristaux liquides dans des cellules d'affichage.

Les dispositifs d'affichage à cristaux liquides comprennent généralement deux plaques ou substrats de confinement munis d'électrodes sur leur surface interne et un matériau cristal liquide placé entre les deux plaques. Par ailleurs, des moyens sont prévus sur les plaques de confinement pour assurer et contrôler l'ancrage des molécules de cristaux liquides.

Le document EP-A-0 351 718 décrit différents exemples de couches d'alignement pour afficheurs à cristaux liquides.

L'homme de l'art sait en particulier orienter les cristaux liquides nématiques soit perpendiculairement à la surface du substrat (cette orientation est dite homéotrope) soit parallèlement à celle-ci (cette orientation est dite planaire), à l'aide de traitements de surface tels que des dépôts de polymère.

Plus précisément encore, les afficheurs à cristaux liquides « nématiques en hélice » nécessitent un ancrage fort, planaire ou plutôt légèrement oblique. Cet ancrage planaire fort est obtenu habituellement suivant l'art connu par dépôt de polymères orientés ou par évaporation de SiO sous un angle donné.

Une autre famille d'afficheur cristal liquide nématique est apparue depuis peu (document WO-97/17632), la famille des afficheurs nématiques par cassure d'ancrage de surface. Ces afficheurs permettent une bistabilité donc un affichage qui reste indéfiniment dans un état choisi parmi deux états possibles, sans consommation d'énergie; seule la commutation entre les deux états nécessite un apport d'énergie. Un autre avantage de la bistabilité est la possibilité d'une haute définition, car le nombre de lignes de l'afficheur n'est fonction que du rapport entre le temps où l'information a besoin d'être changée et le temps d'inscription d'une ligne. Des nombres de lignes supérieurs à 10 000 peuvent ainsi être réalisés. La difficulté majeure de réalisation de ce type d'afficheur est cependant liée à la nécessité de casser l'ancrage sur la surface : il faut disposer d'ancrages reproductibles de faible énergie. La présente invention trouve sa principale utilité dans la réalisation de ce type d'afficheurs.

Un exemple typique de ces afficheurs nématiques bistables utilisant des ancrages faibles est réalisé de la façon suivante. Le cristal liquide est placé entre deux lames de verre revêtues d'une couche conductrice d'oxyde d'étain et d'indium. L'une des électrodes porte un revêtement donnant un ancrage oblique planaire fort, l'autre électrode porte un revêtement donnant un ancrage monostable planaire d'énergie d'ancrage zénithal faible et azimutal moyen ou fort. Deux polariseurs sont en outre disposés de part et d'autre de la cellule avec une orientation adaptée.

Le principe de cette technologie « bistable » réside dans la présence de deux états stables sans champ électrique appliqué, un état uniforme et un état tordu de 180°. Ces deux états correspondent à des niveaux d'énergie minima. Ils sont équilibrés en utilisant un cristal liquide nématique d'anisotropie diélectrique positive, par exemple le pentyl cyano biphényl (connu sous le nom de 5CB) dopé avec un additif chiral.

La technologie d'affichage utilise la possibilité de casser l'ancrage planaire faible et la persistance de l'ancrage planaire fort pour passer d'un état à l'autre, par application d'un champ électrique de forme et d'intensité spécifique. Ce champ perpendiculaire à la cellule, induit une texture homéotrope proche de l'état « noir » de la technologie TN mais où les molécules, près de la surface de faible énergie d'ancrage, sont perpendiculaires à celle-ci. Cette texture hors équilibre est l'état de transition permettant de commuter vers l'un des deux états stables. A l'arrêt du champ, elle se convertira vers l'un ou l'autre des états stables selon que les effets de couplage élastique ou hydrodynamique ont été favorisés.

Différents moyens ont déjà été proposés pour assurer l'ancrage des matériaux cristaux liquides.

Cependant il s'avère très difficile d'identifier des moyens donnant pleinement satisfaction en raison des contraintes nombreuses que doivent respecter ces moyens d'ancrage. L'homme de l'art sait notamment que les moyens d'ancrage doivent : 1) être solubles dans un milieu pour être appliqué convenablement sur la plaque ou substrat récepteur afin de mouiller et recouvrir convenablement celui-ci, 2) être aptes à rendre la plaque ou substrat anisotrope, 3) être non solubles dans le matériau cristal liquide et 4) définir un ancrage donnant l'orientation et l'énergie demandées.

Et si l'on dispose aujourd'hui de moyens aptes à définir des ancrages forts satisfaisants, l'on ne dispose que de très peu de moyens aptes à assurer un ancrage faible (cette notion sera explicitée par la suite).

La présente invention a ainsi pour but de proposer de nouveaux moyens aptes à définir un ancrage de faible énergie.

Ce but est atteint dans le cadre de la présente invention grâce à un procédé tel que défini en revendication 1 annexée laquelle est délimitée sous forme d'un préambule et d'une partie caractérisante par rapport au document EP-A-0 351 718.

Selon une autre caractéristique avantageuse de la présente invention, la stabilisation du dépôt polymère est opérée thermiquement et /ou par insolation ultra-violette

La présente invention permet de réaliser des couches d'ancrage (d'alignement) de faible énergie dans des

cellules de visualisation à cristaux liquides, notamment de cristaux liquides nématiques bistables.

Selon d'autres caractéristiques avantageuses de la présente invention :

. la stabilisation met en oeuvre une insolation par de la lumière ultra-violette,
. la stabilisation met en oeuvre un ou plusieurs recuits,
. la stabilisation utilise un ou plusieurs recuits effectués avant et/ou après une insolation,
. le polymère est choisi dans le groupe comprenant : le poly(chlorure de vinyle), un copolymère de poly(chlorure de vinyle co-acétate de vinyle),
. le polymère est un terpolymère à base de poly(chlorure de vinyle)-poly(acétate de vinyle),
le polymère est un terpolymère à base de poly(chlorure de vinyle)-poly(acétate de vinyle) où le troisième monomère est l'acrylate d'hydroxypropyl ou l'alcool vinylique,
. l'étape ou les étapes de cuisson sont opérées à des températures inférieures à la température de fusion (Tf) du polymère,
. l'étape ou les étapes de cuisson sont opérées pendant une durée de l'ordre de 1h30,
. l'étape d'insolation est opérée à l'aide de lumière ultraviolette de longueur d'onde comprise entre 180 et 400 nm,
. l'étape consistant à définir un ancrage azimutal contrôlé du cristal liquide est assuré par le fait que le » polymère selon l'invention (PVC et copolymères PVC-PVAc) est frotté avec un rouleau recouvert de textile,
. l'étape consistant à définir un ancrage azimutal contrôlé du cristal liquide est assuré par le dépôt du polymère sur un substrat rendu déjà anisotrope par un traitement particulier tel que : un autre polymère brossé ou étiré, SiO ou un autre oxyde évaporé, un réseau (gravé, imprimé ou photoinduit),
. le polymère est déposé sur le substrat par centrifugation,
. le polymère est déposé en solution dans un solvant à base de cétone, telle que la méthyléthylcétone et la diméthylformamide,
. la couche d'ancrage de faible énergie zénithale est déposée sur une électrode transparente ou réfléchissante.

La présente invention concerne également les dispositifs ainsi obtenus.

On va maintenant expliciter les notions d'ancrage « fort » et d'ancrage « faible ».

Les termes « ancrages forts » et « ancrages faibles » peuvent être définis suivant les développements ci-dessous. La source de l'ancrage moléculaire du cristal liquide est l'anisotropie de ses interactions avec la couche d'orientation. On peut caractériser l'ancrage moléculaire par son efficacité et par la direction imposée aux molécules de cristal liquide en l'absence de toute autre influence externe. Cette direction, nommée axe facile, est décrite par le vecteur unité $\vec{n}_o$ ou par les angles zénithal $\theta_o$ et azimutal $\phi_o$ dans le système cartésien de coordonnées ayant l'axe z perpendiculaire à la surface du substrat.

Si l'axe facile des molécules de cristaux liquides est perpendiculaire au substrat, l'alignement est homéotrope. S'il est parallèle au substrat, l'alignement est planaire. Entre ces deux cas, existe l'alignement dit oblique, décrit par l'angle zénithal d'ancrage défini par rapport à la normale à la surface du substrat, ou par son complément nommé angle d'inclinaison (ou "pretilt").

On introduit une densité superficielle d'énergie y pour caractériser la force d'interaction du cristal liquide avec le substrat. Elle dépend de l'orientation $\vec{n}_s$ des molécules de cristal liquide sur la surface (décrite aussi par les angles zénithal $\theta_s$ et azimutal $\varphi_s$)

$$\gamma(\theta_s,\varphi_s)=\gamma(\theta_o,\varphi_o)+g(\theta_s-\theta_o,\varphi_s-\varphi_o)$$

où g représente l'énergie d'ancrage. Elle caractérise la partie anisotrope de l'interaction et devient nulle (par convention) quand l'orientation moléculaire du cristal liquide coïncide avec la direction de l'axe facile.

Dans la plupart des expériences, la variation de l'un des deux angles (zénithal ou azimutal) est prépondérante. C'est pourquoi les deux composantes de l'énergie d'ancrage sont souvent étudiées séparément. La forme la plus connue de l'énergie d'ancrage est celle proposée par Rapini et Papoular (PG de Gennes « J.Phys.Coll. » 30,C-4,(1969)) :

$$g\ (\theta,\varphi)=\frac{w_z}{2}\sin^2(\theta)+\frac{w_a}{2}\sin^2(\varphi)$$

Les coefficients positifs $w_z$ et $w_a$ sont usuellement nommés respectivement énergie d'ancrage zénithale et

azimutale. Ils ont la dimension d'une densité superficielle d'énergie.

L'énergie d'ancrage peut également être donnée par la longueur d'extrapolation. Il s'agit de la distance entre la surface étudiée et la position d'une surface virtuelle. En imposant un ancrage infiniment fort (il est impossible de faire pivoter les molécules situées sur cette surface virtuelle), elle induit la texture réelle du cristal liquide. La longueur d'extrapolation zénithale $L_z$ est proportionnelle à l'inverse de l'énergie d'ancrage $w_z$ selon la relation $L_z = \frac{k_{11}}{w_z}$ où $k_{11}$ est le coefficient d'élasticité de déformation en éventail du cristal liquide considéré. De même on définit la longueur d'extrapolation azimutale $L_a = \frac{k_{22}}{w_a}$, $k_{22}$ étant le coefficient d'élasticité de déformation de torsion du cristal liquide considéré. Généralement, on dit que l'ancrage est fort, quand, pendant le fonctionnement de la cellule, les molécules sur la surface restent pratiquement parallèles à l'axe facile. Par contre, l'ancrage est faible si une déviation appréciable apparaît pendant le fonctionnement.

L'énergie d'ancrage zénithale peut être évaluée par une méthode simple décrite ci-dessous : la mesure du champ critique de cassure de l'ancrage.

On sait que dans une cellule cristal liquide, l'on peut « casser » les ancrages de surface en utilisant un champ électrique $E > E_c$ normal aux plaques, appliqué sur un cristal liquide nématique d'anisotropie diélectrique positive $\varepsilon_a=\varepsilon_{//}-\varepsilon_\perp > 0$. Pour E croissant et s'approchant de $E_c$, l'angle des molécules en surface $\theta_s$, passe rapidement de 90° à 0 ; ceci correspond à une variation détectable de la biréfringence de la cellule. Au dessus de $E_c$, l'angle $\theta_s$ reste nul, la surface est dite 'cassée'.

Le champ critique $E_c$ pour casser l'ancrage est défini par la condition:

$$E_c = \frac{1}{L_z}\sqrt{\frac{K}{\varepsilon_o \varepsilon_a}}$$

K est la constante élastique de courbure (~10 pN) et $L_z$ est la longueur d'extrapolation définissant l'énergie d'ancrage zénithale qui s'écrit :

$$W_z = (1/2)\,(K/L_z)\cos^2\theta_s \qquad (\theta_s \text{ angle des molécules en surface}).$$

Pour des ancrages zénithaux, on considère que l'ancrage est fort, si $L_z$< 20 nm ($E_c$ >20 V/μm) et faible si $L_z$> 40 nm ($E_c$ < 10 V/μm). Les ancrages azimutaux sont un ordre de grandeur plus faibles. On considère que l'ancrage azimutal est fort, si La < 100 nm.

Dans le cadre de la présente invention, l'ancrage faible énergie zénithal est obtenu par dépôt de polymères spécialement choisis à base de poly(chlorure de vinyle) subissant une suite de traitements spécifiques.

Le dépôt de la couche d'ancrage à base de poly(chlorure de vinyle) se fait à partir d'une solution de polymère par centrifugation. Après évaporation du solvant on obtient une couche de polymère d'épaisseur typiquement (mais non limitativement) comprise entre quelques nanomètres et 100 nm.

Ensuite, un frottement par un rouleau textile de l'art connu, est de préférence appliqué sur la couche de polymère pour lui imposer une orientation azimutale qui induira l'ancrage azimutal du cristal liquide.

Pour réaliser une cellule bistable par cassure d'ancrage, la surface d'ancrage (dit faible) doit présenter un ancrage planaire d'énergie d'ancrage zénithal relativement faible ( par exemple $L_z \geq$ 40 nm) et un ancrage azimutal relativement fort ($L_a$ << d, épaisseur de la cellule)

Les polymères et les copolymères objet de l'invention, sont le poly(chlorure de vinyle) (abrégé PVC) I et les copolymères dérivés du chlorure de vinyle et de l'acétate de vinyle (abrégé PVAc) II de formules :

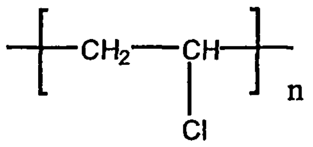

I

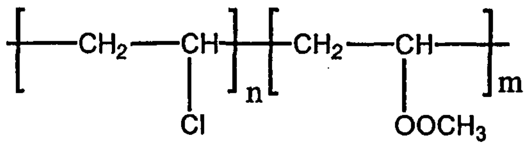

II

A titre d'exemple, les copolymères PVC-PVAc II selon l'invention, ont des compositions 80 :20 pouvant varier.

Des terpolymères dérivés du PVC, PVAc et d'un co-monomère permettent également d'obtenir des couches d'ancrage faible énergie et constituent une variante de l'invention. A titre d'exemple le co-monomère peut être l'acrylate d'hydroxypropyl ou l'alcool vinylique.

Les polymères et copolymères sont déposés sur le substrat par centrifugation d'une solution. Les solvants appropriés sont par exemple des cétones telles que la méthyléthylcétone ou la diméthylformamide.

Après recuit à une température inférieure à la température de fusion Tf, (et supérieure à la température de transition vitreuse Tg), de préférence entre 140°C et 150°C, pendant une durée comprise entre quelques minutes et quelques heures (typiquement entre 30mn et 2h, par exemple de l'ordre de 1h30), la couche de polymère est insolée par rayonnement UV de longueur d'onde comprise entre 180 et 400 nm, et éventuellement recuite à une température de 130 à 170°C. La couche de polymère est ensuite frottée avec un rouleau pour induire l'orientation azimutale.

Les couches sont en général réalisées sur un substrat d'ITO (oxyde mixte d'indium et d'étain) classique, mais d'autres électrodes peuvent être envisagées.

Dans une variante de l'invention, l'orientation azimutale de la couche d'ancrage peut être obtenue par d'autres procédés qu'un frottement avec un rouleau, par exemple en utilisant un substrat préalablement traité:

- par une évaporation oblique de SiO,
- par un polymère brossé par un rouleau ou étiré,
- par un réseau gravé dans le substrat, imprimé ou photoinduit.

Le procédé conforme à la présente invention permet l'obtention d'une couche d'alignement d'ancrage zénithal faible.

Deux exemples de réalisation selon l'invention sont décrits ci-dessous.

Un premier exemple a permis de monter une cellule cristal liquide d'épaisseur 1,3 microns entre deux plaques de verre recouvertes d'ITO. L'une a reçu une évaporation de SiO (d'épaisseur : 107 nm et d'angle d'incidence : 82.5°) pour donner un ancrage fort incliné. L'autre électrode a été recouverte de PVC d'épaisseur 20 à 30 nm et traité selon le procédé de l'invention :

Étape 1 : dépôt par centrifugation du polymère à partir d'une solution à 0.5% en masse dans la méthyl éthyl cétone,
Étape 2: Recuit à 150° pendant 1h30,
Étape 3: Insolation ($\lambda$ =254 nm ) pendant 20 heures avec une lampe à vapeur de mercure de 6 Watts.
Étape 4 : Recuit à 150° pendant 30 minutes
Étape 5 : Brossage, pour induire l'ancrage azimutal, avec un rouleau recouvert de velours textile.

Les deux lames décrites sont assemblées pour réaliser une cellule conforme au concept décrit dans le document WO 97/17632. La cellule est remplie de cristal liquide 5 CB dopé (pas chiral : 5.6 microns). La cellule fonctionne avec des impulsions de 13 Volts à température ambiante et présente un contraste de 50.

Selon un autre exemple de l'invention, le cristal liquide utilisé est un mélange adapté à la technologie conforme au concept décrit dans le document WO 97/17632. La plage de fonctionnement s'étend alors de 18°C à plus de 60°C pour les mêmes impulsions de commande de 13 Volts.

Les ancrages planaires faibles préparés selon l'invention ont les caractéristiques suivantes :

- Les couches d'alignement sont stables chimiquement et mécaniquement dans le temps, au contact des mélanges de cristaux liquides utilisés.
- L'ancrage est planaire, le pretilt est nul, à la précision des mesures utilisées, donc inférieur à 0,2°.
- La longueur d'extrapolation de l'ancrage zénithal, mesurée par une technique de champ fort, pour le 5 CB à température de 22°C, est proche de $L_z$ =50nm et varie peu en fonction du polymère utilisé selon l'invention (PVC-PVAc).

Plusieurs mélanges nématiques commerciaux ont été testés et la longueur d'extrapolation varie de 30 à 60

nm en fonction du nématique et de la température. Ces valeurs correspondent à des énergies d'ancrage zénithales beaucoup plus faibles que celles obtenues avec les polymères classiques utilisés dans les afficheurs nématiques en hélice.

La force de l'ancrage azimutal obtenu dépend du traitement réalisé sur les couches. Par brossage, on obtient par exemple des longueurs d'extrapolation azimutales pouvant varier entre 50 et 200 nm. Ces valeurs sont compatibles avec le fonctionnement des cellules conforme au concept décrit dans le document WO 97/17632.

La présente invention présente notamment les avantages suivants. La réalisation d'ancrage faible énergie selon l'état de la technique, c'est-à-dire avec une couche d'oxyde de silicium SiO, est opérée sous vide. Le processus de dépôt sous vide est long et coûteux, de plus il est difficile à contrôler.

Comparée au procédé connu de réalisation d'ancrage faible énergie, l'utilisation d'une couche polymère selon la présente invention offre les avantages notables de simplicité et de coût de fabrication plus faible.

Bien entendu, la présente invention n'est pas limitée aux modes de réalisation particuliers qui viennent d'être décrits.

## Revendications

1. Procédé de réalisation d'une couche d'alignement de cristal liquide pour dispositifs à cristaux liquides nématiques comprenant les étapes consistant à :

   ■ déposer sur un substrat, un polymère ou copolymère à base de poly(chlorure de vinyle),
   ■ traiter thermiquement ce dépôt polymère, et
   ■ définir une orientation azimutale du dépôt induisant un ancrage azimutal contrôlé du cristal liquide, **caractérisé par le fait que** l'étape de traitement thermique consiste à stabiliser le dépot polymère,

   pour obtenir une faible énergie d'ancrage zénithale du cristal liquide telle que le champ électrique critique de cassure d'ancrage soit inférieur à 10V/$\mu$m sur au moins une de ses plaques de confinement.

2. Procédé selon la revendication 1 **caractérisé en ce que** la stabilisation met en oeuvre une insolation par de la lumière ultra-violette.

3. Procédé selon l'une des revendications 1 ou 2 **caractérisé en ce que** la stabilisation met en oeuvre un ou plusieurs recuits.

4. Procédé selon l'une des revendications 1 à 3 **caractérisé en ce que** la stabilisation utilise un ou plusieurs recuits effectués avant et/ou après une insolation.

5. Procédé selon l'une des revendications 1, 2, 3 ou 4, **caractérisé par le fait que** le polymère est choisi dans le groupe comprenant : le poly(chlorure de vinyle), un copolymère de poly(chlorure de vinyle co-acétate de vinyle).

6. Procédé selon l'une des revendications 1, 2, 3 ou 4, **caractérisé par le fait que** le polymère est un terpolymère à base de poly(chlorure de vinyle) - poly(acétate de vinyle).

7. Procédé selon la revendication 6, **caractérisé par le fait que** le polymère est un terpolymère à base de poly(chlorure de vinyle) -poly(acétate de vinyle) où le troisième monomère est l'acrylate d'hydroxypropyl ou l'alcool vinylique.

8. Procédé selon l'une des revendications 1 à 7 prise en combinaison avec l'une des revendications 3 ou 4 , **caractérisé par le fait que** l'étape ou les étapes de cuisson sont opérées à des températures inférieures à la température de fusion (Tf) du polymère.

9. Procédé selon l'une des revendications 1 à 8 prise en combinaison avec l'une des revendications 3 ou 4, **caractérisé par le fait que** l'étape ou les étapes de cuisson sont opérées pendant une durée de l'ordre de 1h30.

10. Procédé selon l'une des revendications 1 à 9 prise en combinaison avec la revendication 2, **caractérisé par le fait que** l'étape d'insolation est opérée à l'aide de lumière ultraviolette de longueur d'onde comprise entre 180 et 400 nm.

11. Procédé selon l'une des revendications 1 à 10, **caractérisé par le fait que** l'étape consistant à définir un ancrage azimutal contrôlé du cristal liquide est assuré **par le fait que** le » polymère selon l'invention (PVC et copolymères

PVC-PVAc) est frotté avec un rouleau recouvert de textile.

**12.** Procédé selon l'une des revendications 1 à 10, **caractérisé par le fait que** l'étape consistant à définir un ancrage azimutal contrôlé du cristal liquide est assuré par le dépôt du polymère sur un substrat rendu déjà anisotrope par un traitement particulier tel que : un autre polymère brossé ou étiré, SiO ou un autre oxyde évaporé, un réseau (gravé, imprimé ou photoinduit).

**13.** Procédé selon l'une des revendications 1 à 12, **caractérisé par le fait que** le polymère est déposé sur le substrat par centrifugation.

**14.** Procédé selon l'une des revendications 1 à 13 **caractérisé par le fait que** le polymère est déposé en solution dans un solvant à base de cétone, telle que la méthyléthylcétone et la diméthylformamide.

**15.** Dispositif à cristaux liquides nématiques bistable, utilisant au moins une couche d'ancrage faible énergie zénithale réalisée selon le procédé conforme à l'une des revendications 1 à 14.

**16.** Dispositif selon la revendication 15, **caractérisé par le fait que** le polymère est choisi dans le groupe comprenant : le poly(chlorure de vinyle), un copolymère de poly(chlorure de vinyle co-acétate de vinyle), un terpolymère à base de poly(chlorure de vinyle) et poly(acétate de vinyle)

**17.** Dispositif selon l'une des revendications 15 ou 16 **caractérisé par le fait que** la couche d'ancrage de faible énergie zénithale est déposée sur une électrode transparente ou réfléchissante.

## Claims

**1.** A method of making a liquid crystal alignment layer for nematic liquid crystal devices, the method comprising the steps consisting in:

- depositing a polymer or copolymer based on PVC onto a substrate;
- heat treating the polymer deposit; and
- defining an azimuth orientation for the deposit to induce controlled azimuth anchoring of the liquid crystal;

the method being **characterized by** the fact that the heat-treatment step consists in stabilizing the polymer deposit in order to obtain low energy zenith anchoring for the liquid crystal such that the critical electrical field for breaking the anchoring is less than 10 V/μm over at least one of its confinement plates.

**2.** A method according to claim 1, **characterized in that** the stabilization implements exposure to ultraviolet light.

**3.** A method according to claim 1 or claim 2, **characterized in that** the stabilization implements one or more annealing steps.

**4.** A method according to any one of claims 1 to 3, **characterized in that** the stabilization uses one or more annealing steps performed before and/or after exposure.

**5.** A method according to any one of claims 1, 2, 3, or 4, **characterized by** the fact that the polymer is selected from the group comprising PVC and a copolymer of PVC and PVAc.

**6.** A method according to any one of claims 1, 2, 3, or 4, **characterized by** the fact that the polymer is a terpolymer based on PVC-PVAc.

**7.** A method according to claim 6, **characterized by** the fact that the polymer is a terpolymer based on PVC-PVAc in which the third monomer is hydroxypropyl acrylate or vinyl alcohol.

**8.** A method according to any one of claims 1 to 7 in combination with claim 3 or claim 4, **characterized by** the fact that the heating step(s) is/are performed at temperatures below the melting point (mp) of the polymer.

**9.** A method according to any one of claims 1 to 8 taken in combination with claim 3 or claim 4, **characterized by** the

fact that the heating step(s) is/are performed for a duration of about 1 h30.

**10.** A method according to any one of claims 1 to 9 taken in combination with claim 2, **characterized by** the fact that the exposure step is performed using ultraviolet light having a wavelength lying in the range 180 nm to 400 nm.

**11.** A method according to any one of claims 1 to 10, **characterized by** the fact that the step consisting in defining controlled azimuth anchoring of the liquid crystal is performed by the fact that the polymer of the invention (PVC and PVC-PVAc copolymers) is rubbed with a textile-covered roller.

**12.** A method according to any one of claims 1 to 10, **characterized by** the fact that the step consisting in defining controlled azimuth anchoring of the liquid crystal is performed by depositing the polymer on a substrate that has already been made anisotropic by special treatment such as: another brushed or stretched polymer; evaporated SiO or other oxide; a grating (etched, printed, or photoinduced).

**13.** A method according to any one of claims 1 to 12, **characterized by** the fact that the polymer is deposited on the substrate by centrifuging.

**14.** A method according to any one of claims 1 to 13, **characterized by** the fact that the polymer is deposited in solution in a solvent based on ketone, such as methyl ethyl ketone or dimethyl formamide.

**15.** A bistable nematic liquid crystal device using at least one anchoring layer with low zenith energy made using the method according to any one of claims 1 to 14.

**16.** A device according to claim 15, **characterized by** the fact that the polymer is selected from the group comprising: PVC, a copolymer of PVC and PVAc, a terpolymer based on PVC and PVAc.

**17.** A device according to claim 15 or claim 16, **characterized by** the fact that the anchoring layer having low zenith energy is deposited on an electrode that is transparent or reflecting.

**Patentansprüche**

**1.** Verfahren zur Herstellung einer Flüssigkristall-Orientierungsschicht für Vorrichtungen mit nematischen Flüssigkristallen, umfassend die Schritte:

- Beschichten eines Substrats mit einem Polyvinylchlorid-Polymer oder -Copolymer,
- thermisches Behandeln dieser Polymerbeschichtung und
- Definieren einer azimutalen Orientierung der Beschichtung, die eine kontrollierte azimutale Verankerung des Flüssigkristalls induziert,

**dadurch gekennzeichnet, dass** der Schritt der thermischen Behandlung darin besteht, die Polymerbeschichtung zu stabilisieren, um eine geringe zenitale Verankerungsenergie des Flüssigkristalls zu erhalten, so dass das kritische elektrische Feld, das die Verankerung löst, auf zumindest einer seiner Begrenzungsplatten unter 10 V/$\mu$m liegt.

**2.** Verfahren nach Anspruch 1, **dadurch gekennzeichnet, dass** die Stabilisierung eine Bestrahlung mit ultraviolettem Licht einsetzt.

**3.** Verfahren nach Anspruch 1 oder 2, **dadurch gekennzeichnet, dass** die Stabilisierung ein ein- oder mehrmaliges Ausheizen einsetzt.

**4.** Verfahren nach einem der Ansprüche 1 bis 3, **dadurch gekennzeichnet, dass** die Stabilisierung ein ein- oder mehrmaliges Ausheizen einsetzt, das vor und/oder nach einer Bestrahlung durchgeführt wird.

**5.** Verfahren nach einem der Ansprüche 1, 2, 3 oder 4, **dadurch gekennzeichnet, dass** das Polymer ausgewählt ist aus der Gruppe, bestehend aus Polyvinylchlorid, einem Polyvinylchlorid-Polyvinylacetat-Copolymer.

**6.** Verfahren nach einem der Ansprüche 1, 2, 3 oder 4, **dadurch gekennzeichnet, dass** das Polymer ein Polyvinylchlorid-Polyvinylacetat-Terpolymer ist.

**7.** Verfahren nach Anspruch 6, **dadurch gekennzeichnet, dass** das Polymer ein Polyvinylchlorid-Polyvinylacetat-Terpolymer ist, in dem das dritte Monomer Hydroxypropylacrylat oder Vinylalkohol ist.

**8.** Verfahren nach einem der Ansprüche 1 bis 7 in Kombination mit einem der Ansprüche 3 oder 4, **dadurch gekennzeichnet, dass** der oder die Brennschritte bei einer Temperatur unter dem Schmelzpunkt (Ts) des Polymers durchgeführt wird bzw. werden.

**9.** Verfahren nach einem der Ansprüche 1 bis 8 in Kombination mit einem der Ansprüche 3 oder 4, **dadurch gekennzeichnet, dass** der oder die Brennschritte während einer Dauer in der Größenordnung von 1:30 Stunden durchgeführt wird bzw. werden.

**10.** Verfahren nach einem der Ansprüche 1 bis 9 in Kombination mit Anspruch 2, **dadurch gekennzeichnet, dass** der Bestrahlungsschritt mittels ultraviolettem Licht mit einer Wellenlänge zwischen 180 und 400 nm durchgeführt wird.

**11.** Verfahren nach einem der Ansprüche 1 bis 10, **dadurch gekennzeichnet, dass** der Schritt, der darin besteht, eine kontrollierte azimutale Verankerung des Flüssigkristalls zu definieren, **dadurch** gewährleistet ist, dass das erfindungsgemäße Polymer (PVC und PVC-PVAc-Copolymere) mit einer textilüberzogenen Rolle gerieben wird.

**12.** Verfahren nach einem der Ansprüche 1 bis 10, **dadurch gekennzeichnet, dass** der Schritt, der darin besteht, eine kontrollierte azimutale Verankerung des Flüssigkristalls zu definieren, **dadurch** gewährleistet ist, dass ein Substrat mit dem Polymer beschichtet wird, welches bereits durch eine spezielle Behandlung anisotrop gemacht wurde, wie ein anderes gebürstetes oder gestrecktes Polymer, SiO oder ein anderes aufgedampftes Oxid, ein Gitter (geätzt, aufgedruckt oder lichtinduziert).

**13.** Verfahren nach einem der Ansprüche 1 bis 12, **dadurch gekennzeichnet, dass** das Polymer durch Zentrifugation auf das Substrat aufgetragen wird.

**14.** Verfahren nach einem der Ansprüche 1 bis 13, **dadurch gekennzeichnet, dass** das Polymer in einem Keton-Lösungsmittel, wie Methylethylketon und Dimethylformamid, gelöst aufgetragen wird.

**15.** Bistabile Anzeige mit nematischen Flüssigkristallen, die mindestens eine Verankerungsschicht mit geringer zenitaler Verankerungsenergie verwendet, welche gemäß dem Verfahren nach einem der Ansprüche 1 bis 14 hergestellt wird.

**16.** Anzeige nach Anspruch 15, **dadurch gekennzeichnet, dass** das Polymer ausgewählt ist aus der Gruppe, bestehend aus Polyvinylchlorid, einem Polyvinylchlorid-Polyvinylacetat-Copolymer, einem Polyvinylchlorid-Polyvinylacetat-Terpolymer.

**17.** Anzeige nach Anspruch 15 oder 16, **dadurch gekennzeichnet, dass** die Verankerungsschicht mit geringer zenitaler Verankerungsenergie auf einer transparenten Elektrode oder einer Reflexionselektrode aufgetragen wird.